# EUROPEAN PATENT SPECIFICATION

(11) **EP 3 197 273 B1**
(45) Date of publication and mention of the grant of the patent: **11.11.2020**
(21) Application number: 15770799.3
(22) Date of filing: 24.09.2015
(51) Int. Cl.: A01N 25/04, A01N 57/20, A01P 13/00, A01P 13/02, A01P 7/02, A01P 7/04, A01P 3/00, A01P 21/00

(54) **PESTICIDE COMPOSITIONS AND USE THEREOF**
PESTIZIDZUSAMMENSETZUNGEN UND VERWENDUNG DAVON
COMPOSITIONS DE PESTICIDES ET UTILISATION CORRESPONDANTE

(30) Priority: 25.09.2014 EP 14003320
(43) Date of publication of application: 02.08.2017
(73) Proprietor: Borregaard AS, 1721 Sarpsborg (NO)
(72) Inventor: ROSENBERG READ, Marianne, N-1721 Sarpsborg (NO); ØVREBØ, Hans Henrik, N-1721 Sarpsborg (NO); DE RUITER, Hans, NL-6709 PD Wageningen (NL)
(74) Representative: Tostmann, Holger Carl
(86) International application number: PCT/EP2015/001895
(87) International publication number: WO 2016/045795

(56) References cited:
- WO-A1-01/66600
- WO-A1-2011/103158
- WO-A1-2013/009253
- WO-A1-2013/184516
- WO-A1-2014/154348
- WO-A1-2015/043750
- WO-A2-2009/063508
- WO-A2-2010/039865
- US-A- 5 405 953
- US-A- 5 580 974

## Description

The present invention relates to a pesticide composition comprising at least one pesticide compound, at least one surfactant and at least one microfibrillated cellulose as defined in claim 1.

The present invention also relates to the use of such a pesticide composition, as defined in claim 15, for controlling undesired plant growth, undesired attack by insects or mites, fungi, and/or for regulating the growth of plants.

### Background of the Invention

Pesticides, in particular herbicides, insecticides and fungicides are widely used in the agricultural industry. A particular interest in this field is the development and use of *adjuvants* in the agrochemical industry.

WO 2013/184516 discloses pesticide compositions having a high concentration of a water-soluble herbicide as well as a solid water-insoluble pesticide, for example the herbicide penoxsulam. Compositions are, among other things, stable upon storage in various thermal environments and exhibit enhanced resistance to settling of the solid particles and/or enhanced resistance to chemical degradation of the water-insoluble pesticide.

US 5 580 974 discloses microfibrillated oxycellulose suitable for use as a carrier in agricultural, cosmetic, and topical and transdermal drug products, and as a binder and disintegrant in the making of tablets, is prepared by the oxidation of cellulosic materials with persulfate salts in water, with or without the presence of an aqueous inorganic acid, or in glacial or aqueous acetic acid.

US 5 405953 discloses a method of making microfibrillated oxycellulose comprising: reacting a mixture comprising a persulfate salt and a suspended cellulosic material at a temperature effective to convert the cellulosic material into microfibrillated oxycellulose. *Adjuvants* are extensively used in combination with agrochemicals, in particular pesticides, in order to increase the activity or otherwise improve properties of the agrochemical. An adjuvant for agrochemicals is a compound that enhances the biological activity of the agrochemical without having any significant (biological) activity on its own. Among others, the use of adjuvants can reduce spray drift, improve wetting of the plant leaves or increase the uptake of the agrochemical into the plant leaves.

*Surfactants* are one example for adjuvants as used for pesticides. Surfactants reduce the surface tension of the pesticide solution, in particular spray solution, and thereby improve, amongst others wetting of the target plant and rain fastness and reduce "bounce-off' of the droplets. It is important to control these properties in order to assure that as much pesticide as possible reaches and stays on the plant leaves and is uniformly distributed. Some surfactants are also capable of altering the permeability of the leaf cuticle, or interact with the pesticides and aid the uptake of the agrochemical through the plant leaves.

Among the potential disadvantages of using surfactants, in particular at higher concentrations, is the fact that surfactants often form a foam, in particular at higher surfactant concentrations, which may negatively affect the process of preparing and applying the spray solution. Many commonly used surfactants are also irritants that can be harmful for humans and/or the environment.

In general, an important objective is to reduce the toxicity and the environmental impact of adjuvants. One challenge is to find surfactants that are both highly efficient and not harmful to the person applying the pesticide or the environment.

As an example, tallow amine ethoxylate based surfactants are known to be among the most efficient adjuvants for Glyphosate, the number one herbicide worldwide. Tallow amine ethoxylates aid the uptake of Glyphosate through the plant leaves and improve wetting of the plant leaves. However, since tallow amine ethoxylates are also irritants and harmful to the aquatic environment, there is a need in finding a replacement for these surfactants.

There are surfactants, which are more environmentally friendly than tallow amine ethoxylates and result in good wetting properties. However, these surfactants do not significantly enhance the uptake of the agrochemical through the plant leaves. Therefore, it is an object of the present invention to provide a new type of environmentally compatible adjuvants for pesticide compositions, in particular herbicide compositions, which have improved wetting and/or uptake properties vis-à-vis adjuvants known from the art.

### Summary of the Invention

The above mentioned object and other objects are achieved by the composition of claim 1 as well as the method and the use of claims 14 and 15, respectively.

In particular, the present invention relates to a pesticide composition comprising:
i) at least one pesticide compound,
ii) at least one microfibrillated cellulose, and
iii) at least one surfactant
wherein the raw material for the at least one microfibrillated cellulose is not cellulose of bacterial origin, and wherein the amount of the microfibrillated cellulose in said composition is from 0.001%-0.1% by weight.

Furthermore, the present invention relates to a method for preparing a pesticide composition comprising the steps of mixing at least one pesticide, at least one surfactant and at least one microfibrillated cellulose, in accordance with claim 14.

The present invention also relates to the use of a microfibrillated cellulose as an adjuvant in the pesticide composition of any of claims 1 to 13.

### Detailed Description of the Invention

In the following, the invention is described with reference to the enclosed figures, wherein:
- **Figure 1**: shows the efficiency of glyphosate on black nightshade plants for different concentrations of a first surfactant (sucrose laurate) and MFC (100% fresh weight" equals the fresh weight of *untreated* plant);
- **Figure 2**: shows the efficiency of glyphosate on black nightshade plants for different concentrations of a second surfactant (ethoxylated fatty alcohol) and MFC;
- **Figure 3**: shows the efficiency of glyphosate on black nightshade plants for different concentrations of a third surfactant (polyglycerol derivative) and MFC;
- **Figure 4**: shows the efficiency of glyphosate on Winter wheat plants for various combinations of different surfactants and MFC;

Microfibrillated cellulose (MFC) as used within the claimed composition and in the meaning of the present invention relates to cellulose fibers of various origins, except of bacterial origin, in which the fiber length and/or diameter is reduced vis-à-vis the fiber length/diameter of the original fiber. In particular, MFC according to the present invention is cellulose in fiber form that has been subjected to a mechanical treatment in order to increase the fiber's specific surface and to reduce their size in terms of cross-section and of length, wherein said size reduction leads to a fiber diameter in the nanometer range and a fiber length in the micrometer range. In particular, the microfibrillated cellulose has a high aspect ratio (ratio of length to diameter).

MFC is prepared from cellulose fibers which are defibrillated using high pressure or high mechanical force. Due to its large surface area and a high aspect ratio, microfibrillated cellulose is viewed as having a good ability to form rigid networks. The large surface area of the MFC and the high amount of accessible hydroxyl groups results in the MFC having high water holding capacity. The term "MFC", in accordance with the present invention, encompasses any single kind of microfibrillated cellulose, except of bacterial origin, as well as any mixture of structurally different microfibrillated celluloses, except of bacterial origin.

The microfibrillated cellulose, in accordance with the present invention, may be unmodified with respect to some or all of the functional groups present or may be physically modified and/or chemically modified resulting in neutral or negatively charged groups on the microfibril surface, or both.

Chemical modification of the surface of the cellulose microfibrils in the present invention is preferably achieved by various possible reactions of the surface functional groups of the cellulose microfibrils and more particularly of the hydroxyl functional groups resulting in neutral or negatively charged groups on the microfibril surface, preferably by one of the following: oxidation, silylation reactions, etherification reactions, condensations with isocyanates, alkoxylation reactions with alkylene oxides, or condensation or substitution reactions with glycidyl derivatives. The chemical modification may take place before or after the defibrillation step.

The cellulose microfibrils may also be modified by a physical method, either by adsorption at the surface, or by spraying, or by coating, or by encapsulation of the microfibril. Preferred modified microfibrils can be obtained by physical adsorption of at least one compound. The microfibrils can be modified by physical adsorption of at least one amphiphilic compound. Preferably, microfibrils are modified by physical adsorption of at least one non-ionic surfactant. EP 2 408 857 describes processes for preparing surface modified MFC. The physical modification of the MFC surface may take place before or after the defibrillation step.

The *modification* of MFC with the aid surfactants, which is optional, is independent of the admixing of (modified or unmodified) MFC with surfactants, which act as adjuvants in a pesticide composition, in the meaning of the present invention.

In certain embodiments, the microfibrillated cellulose is free of cationic substituents.

Microfibrillated cellulose is described, among others in US 4 481 077, US 4 374 702 and US 4 341 807. According to US 4 374 702 ("Turbak"), microfibrillated cellulose has properties distinguishable from previously known celluloses. MFC in accordance with "Turbak" is produced by passing a liquid suspension of cellulose through a small diameter orifice in which the suspension is subjected to a large pressure drop and a high velocity shearing action followed by a high velocity decelerating impact, and repeating the passage of said suspension through the orifice until the cellulose suspension becomes a substantially stable suspension. The process converts the cellulose into microfibrillated cellulose without substantial chemical change of the cellulose starting material.

An improved process for obtaining particularly homogeneous MFC is described in WO 2007/091942.

In principle, the raw material ("origin") for the MFC in accordance with the present invention may be any cellulosic material, in particular wood, annual plants, cotton, flax, straw, ramie, bagasse (from sugar cane), suitable algae, jute, sugar beet, citrus fruits, waste from the food processing industry or energy crops or cellulose from animal origin, e.g. from tunicates, but not of bacterial origin.

In one preferred embodiment, wood based materials are used as raw materials, either softwood or hardwood or both. Further preferably, softwood is used as raw material either one kind of softwood or mixtures of different types of softwood.

The MFC in accordance with the present invention may be produced according to any process known in the art. Preferably, said method comprises at least one mechanical pre-treatment step and at least one homogenizing step. The mechanical pre-treatment step preferably is or comprises a refining step. The method may also comprise a chemical pretreatment step. One examples of such pretreatment step might be oxidation of the C₆ hydroxyl groups on the surface of the microfibrils to carboxylic acids. The negative charges of the carboxylic groups cause repulsion between the microfibrils, which aids the defibrillation of the cellulose.

The purpose of the mechanical pretreatment step in accordance with the present process for manufacturing MFC is to "beat" the cellulose pulp in order to increase the accessibility of the cell walls, i.e. to increase the surface area. In the refiner that is preferably used in the mechanical pretreatment step, at least one rotating disk is employed. Therein, the cellulose pulp slurry is subjected to shear forces between the at least one rotating disk and at least one stationary disk.

Prior to the mechanical or chemical pretreatment step, or in between the mechanical or chemical pretreatment steps, or as the mechanical pretreatment step, enzymatic (pre)treatment of the cellulose pulp may be optionally performed, as preferred for some applications. In regard to enzymatic pretreatment in conjunction with microfibrillating cellulose, the respective content of WO 2007/091942 is cited..

Physical modification of the cellulose microfibril surface may occur prior to the mechanical pretreatment step, between the mechanical pretreatment step and the defibrillation step or after the defibrillation step.

The pretreated cellulose pulp slurry is preferably passed through a homogenizer (a high-pressure homogenizer or a low-pressure homogenizer) and subjected to a pressure drop by forcing the pulp slurry between opposing surfaces, preferably orifices. The term "orifice" means an opening or a nozzle or a valve contained in a homogenizer suitable for homogenizing cellulose.

The MFC according to the present invention may be subjected to at least one dewatering and/or drying step. The at least one drying step is preferably selected from freeze-, spray-, roller-drying; drying in a convection oven, flash drying or the like. "Never dried" microfibrillated cellulose may also be used and the microfibrillated cellulose used in the present invention might have a dry content ranging from 0.1%-100% before it is added to the composition.

The pesticide composition of the present invention comprises at least one pesticide compound, at least one microfibrillated cellulose that is not of bacterial origin and in an amount of 0.001 to 0.1 wt.% and at least one surfactant.

In certain embodiments, the amount of the microfibrillated cellulose is from 0.0025% - 0.1%, preferably 0.005%-0.1%, and most preferably 0.01%-0.1%.

In certain embodiments, the microfibrillated cellulose (MFC) is an unmodified MFC and/or a chemically modified MFC having neutral or negatively charged substituents and/or a physically modified MFC.

In certain embodiments, the microfibrillated cellulose (MFC) is an unmodified MFC and/or a chemically modified MFC having neutral or negatively charged substituents and is present in an amount of from 0.001 - 0.1% by weight, preferably 0.0025% - 0.1%, more preferably 0.01%-0.1%.

In certain embodiments, the microfibrillated cellulose (MFC) is a physically modified MFC and is present in an amount of from 0.001 - 0.1% by weight, preferably 0.0025% - 0.1%, more preferably 0.01%-0.1%.

In accordance with the present invention the term *"pesticide"* refers to at least one active compound selected from the groups of herbicides, insecticides, fungicides, nematicides and/or growth regulators. Preferably the pesticide is a herbicide, fungicide, insecticide or a growth regulator. More preferably the pesticide is a herbicide.

The subject invention works in a particularly advantageous manner for hydrophilic pesticides, but may also be used for pesticides with intermediate lipophilicity and for hydrophobic pesticides.

The meaning of the term *"hydrophilic"* as used in accordance with the present invention is the term as defined according to IUPAC Compendium of Chemical Terminology as *"the capacity of a molecular entity or of a substituent to interact with polar solvents, in particular with water, or with other polar groups".*

In one embodiment the pesticide is a herbicide selected from the following herbicide classes and compounds, which are generally viewed as hydrophilic herbicides: Acetyl CoA carboxylase (ACCase) inhibitors such as Quizalofop-P-ethyl, Acetolactate synthase (ALS) inhibitors or Acetohydroxy acid synthase (AHAS) inhibitors such as Nicosulfuron, Photosystem II inhibitors such as Bentazon, Photosystem I inhibitors such as Diquat and Paraquat, Carotenoid biosynthesis inhibitors such as Amitrole and Mesotrione, Enolpyruvyl shikimate-3-phosphate (EPSP) synthase inhibitors such as Glyphosate, Glutamine synthase inhibitors such as Glufosinate, Synthetic auxins such as 2,4-D (acid and salts), Dicamba, MCPA (acid and salts) and fluoroxypyr.

In one embodiment the pesticide is a growth regulator selected from the class of Gibberellin biosynthesis inhibitors such as Daminozide and Chloromequat.

In one embodiment the pesticide is an insecticide selected from the class of Organophosphates, such as Acephate.

In one embodiment the pesticide is a fungicide such as Copper sulphate.

The pesticide amount used in the pesticide composition of the present invention can vary in a broad range and is dependent on various factors such as the type of pesticide, climate conditions, fungal, insect or plant species to be controlled and so on.

The meaning of the term *"adjuvant"* a used according to the present invention is understood to be in accordance with the definition of an adjuvant given by ISAA (International Society for Agrochemical Adjuvants): *"An adjuvant is a substance without significant pesticide properties, added to a agricultural composition to aid or modify the activity of this chemical",* wherein the function of the adjuvant may be, among others, emission reduction, wetting of the target plant, make-up of the drop deposit (for example humectancy and solubility), increased uptake of the pesticide into the target, improved rainfastness, reduced antagonist effect, overcoming compatibility problems and/or foam reduction.

The meaning of a *"surfactant"* in accordance with the present invention is a substance which lowers the surface tension of the medium in which it is dissolved. According to one embodiment, the surfactant may be either a cationic, anionic, zwitterionic or non-ionic surfactant. In one preferred embodiment the surfactant is a non-ionic surfactant.

In a preferred embodiment, a surfactant in accordance with the present invention lowers the surface tension of water (i.e. the surface tension between water and air), as measured in accordance with the article *"*Reduction of Surface Tension by Novel Polymer Surfactants" by K. Ogino et al, Langmuir 6 (1990) pages 1330 et seq., by at least 5%, preferably by at least 10%, further preferably by at least 15%, further preferably by at least 25%, as measured at a concentration of the surfactant in water that is in the range of from 0.1 % to 1 %.

Further preferably, the surfactant is a non-ionic surfactant selected from the following surfactant types: Alkylphenol ethoxylates, alcohol ethoxylates, fatty acid ethoxylates, amine ethoxylates, polyalkyloxy compounds, sorbitan esters and their ethoxylates, castor oil ethoxylates, ethylene oxide /propylene oxide copolymers, alkanol/propylene oxide /ethylene oxide copolymers, alkylpolysaccaride, polyalcohols and ethoxylated polyalcohols.

In accordance with the present invention, the amount of surfactant in the composition is from 0.005% to 2%, preferably 0.01% to 1%, further preferably 0.02 - 0.5%.

In one preferred embodiment the surfactant is an alcohol ethoxylate, amine ethoxylate, polyalcohol, ethoxylated polyalcohol, castor oil ethoxylate and/or alkylpolysaccaride.

The pesticide composition in accordance with the present invention comprises at least one surfactant but may also contain mixtures of different surfactants and/or mixtures of surfactants with other adjuvants.

It was surprisingly found that when MFC, as an adjuvant in a pesticide composition, is combined with a surfactant in said pesticide composition, the efficiency of the pesticide is enhanced compared to using only a surfactant as an adjuvant and also to using only MFC as an adjuvant. It has been surprisingly found that by combining MFC and surfactants, synergistic effects are observed and adjuvant compositions that have highly efficient uptake and that have improved wetting properties are obtained. Combining MFC and environmentally friendly surfactants results in highly efficient and environmentally friendly adjuvant compositions that can replace other less environmentally friendly adjuvants, such as tallow amine ethoxylates.

Irrespective of the surfactant used, i.e. irrespective of the question how environmentally critical the surfactant may be, using cellulose-based, highly environmentally compatible, MFC helps reducing the amount of surfactant that is required in the overall composition.

The adjuvant composition containing MFC and at least one surfactant described in the present invention can either be included in the pesticide formulation (built-in adjuvant) or added to the tank-mix by the farmer (tank-mix adjuvant).

Without wishing to be bound to any theory, it is believed that MFC acts as a humectant, i.e. aids at keeping water in the drop deposit longer and thereby increasing the time the pesticide is available for affecting the target pest. This is especially advantageous for hydrophilic pesticides, For applications involving penetration of plant leaves by the active ingredient, it is also believed that MFC affects the actual penetration of the plant leaf, possibly by attracting water from the interior of the leaf to the surface of the plant leaf resulting in a change in the properties of the plant leaf surface. This is, amongst others, important for hydrophilic herbicides as it can be difficult for the hydrophilic herbicides to penetrate the lipophilic surface of the plant leaves.

In one embodiment, the MFC acts as a humectant for pesticide spray solutions.

In exemplary embodiments it was found that MFC enhances the activity of the herbicide Glyphosate in combination with sucrose laurate, ethoxylated fatty alcohol and polygycerol based surfactants. MFC enhances the uptake of Glyphosate into the plant leaves of plants that have leaf cuticles that are very difficult for Glyphosate to penetrate, such as the Black nightshade plant. It was also found that the surfactants in the composition ensure excellent wetting properties which are important on grass type weed species, such as Winter wheat.

### EXAMPLES

In accordance with the following examples, the pesticides were applied at a dosage that is below the fully effective dosage as it is then easier to identify the adjuvant effects at lower dosages. The efficacy of the MFC and different surfactants, alone and in combination, on pesticide efficiency was determined by harvesting the aerial parts of the weed plants several weeks after treatment and determining the "fresh" weight, i.e. the weight as harvested.

In the following examples, all percentages stated refer to wt-%, unless indicated otherwise.

### Experimental methods and materials

### Plant material

Black nightshade (SOLNI) and winter wheat (*Triticum aestivum,* cv. Rektor) were grown in a growth chamber under 14 h of light, at 19/14 (±0.5) °C (day/night) temperature, and in 70-80% (day/night) relative humidity. Light was provided by high-pressure sodium lamps (SON-T), high-pressure mercury lamps (HPI) and fluorescent tubes to give 250 pmol m⁻² s⁻¹ at leaf level. The seedlings were grown in 12cm-diam. plastic pots filled with a mixture of sand and humic potting soil (1:4 by volume). The pots were placed on subirrigation matting, which was wetted daily with nutrient solution. After emergence the seedlings were thinned to 1 (Black nightshade) or 6 (wheat) plants per pot. Black nightshade was treated at the 4-leaf stage, wheat was treated at the 3-leaf stage. The "fresh" weight of the plants, respectively, was measured 14 days after treatment (Black nightshade) or 21 days after treatment (wheat).

### Pesticide application

The pesticide solutions were applied with an air-pressured laboratory track sprayer having Teejet TP8003E nozzles and delivering 200 L/ha at 303 kPa.

### Treatment solutions

The glyphosate product MON 8717 (480 g/L a.e. IPA salt or 2.84 M without additions) was used to prepare the herbicide solutions. A sub-optimal rate of herbicide was used, giving in theory a 0-20% growth reduction without adjuvant. This enables an easier evaluation of differences between formulations/adjuvants. For Black nightshade, glyphosate was applied at a concentration of 0.6 mM (equivalent to 20.3 g a.e./ha at 200 L/ha), and for wheat at a concentration of 2.4 mM (equivalent to 81.2 g a.e./ha at 200 L/ha) was applied.

### Surfactants

Three different types on non-ionic surfactants were used in the experiments:
- Alkylpolysaccaride - a sucrose laurate based surfactant
- Alcohol ethoxylate - surfactant with a tridecyl chain and 8 EO groups on average
- Polyalcohol - polyglycerol based surfactant

### Example 1 (comparative)

An aqueous solution of Glyphosate (0.6 mM) was applied to Black nightshade. The experiment and evaluation were performed as described above in the experimental methods.

### Example 2

An aqueous solution of Glyphosate (0.6 mM) and MFC (0.02%) was applied to Black nightshade. The experiment and evaluation were performed as described above in the experimental methods.

### Example 3

An aqueous solution of Glyphosate (0.6 mM) and sucrose laurate based surfactant (0.02%) was applied to Black nightshade. The experiment and evaluation were performed as described above in the experimental methods.

### Example 4

An aqueous solution of Glyphosate (0.6 mM) and sucrose laurate based surfactant (0.25%) was applied to Black nightshade. The experiment and evaluation were performed as described above in the experimental methods.

### Example 5

An aqueous solution of Glyphosate (0.6 mM), sucrose laurate based surfactant (0.02%) and MFC (0.02%) was applied to Black nightshade. The experiment and evaluation were performed as described above in the experimental methods.

### Example 6

An aqueous solution of Glyphosate (0.6 mM), sucrose laurate based surfactant (0.25%) and MFC (0.02%) was applied to Black nightshade. The experiment and evaluation were performed as described above in the experimental methods.

### Example 7

An aqueous solution of Glyphosate (0.6 mM) and alcohol ethoxylate based surfactant (0.02%) was applied to Black nightshade. The experiment and evaluation were performed as described above in the experimental methods.

### Example 8

An aqueous solution of Glyphosate (0.6 mM) and alcohol ethoxylate based surfactant (0.25%) was applied to Black nightshade. The experiment and evaluation were performed as described above in the experimental methods.

### Example 9

An aqueous solution of Glyphosate (0.6 mM), alcohol ethoxylate based surfactant (0.02%) and MFC (0.02%) was applied to Black nightshade. The experiment and evaluation were performed as described above in the experimental methods.

### Example 10

An aqueous solution of Glyphosate (0.6 mM), alcohol ethoxylate based surfactant (0.25%) and MFC (0.02%) was applied to Black nightshade. The experiment and evaluation were performed as described above in the experimental methods.

### Example 11

An aqueous solution of Glyphosate (0.6 mM), and a polyglycerol based surfactant (0.25%) was applied to Black nightshade. The experiment and evaluation were performed as described above in the experimental methods.

### Example 12

An aqueous solution of Glyphosate (0.6 mM), polyglycerol based surfactant (0.25%) and MFC (0.02%) was applied to Black nightshade. The experiment and evaluation were performed as described above in the experimental methods.

### Example 13 (comparative)

An aqueous solution of Glyphosate (2.4 mM) was applied to Winter wheat. The experiment and evaluation were performed as described above in the experimental methods.

### Example 14

An aqueous solution of Glyphosate (2.4 mM), sucrose laurate based surfactant (0.02%) and MFC (0.02%) was applied to Winter wheat. The experiment and evaluation were performed as described above in the experimental methods.

### Example 15

An aqueous solution of Glyphosate (2.4 mM), sucrose laurate based surfactant (0.25%) and MFC (0.02%) was applied to Winter wheat. The experiment and evaluation were performed as described above in the experimental methods.

### Example 16

An aqueous solution of Glyphosate (2.4 mM), alcohol ethoxylate based surfactant (0.02%) and MFC (0.02%) was applied to Winter wheat. The experiment and evaluation were performed as described above in the experimental methods.

### Example 17

An aqueous solution of Glyphosate (2.4 mM), alcohol ethoxylate based surfactant (0.25%) and MFC (0.02%) was applied to Winter wheat. The experiment and evaluation were performed as described above in the experimental methods.

### Example 18

An aqueous solution of Glyphosate (2.4 mM), polyglycerol based surfactant (0.25%) and MFC (0.02%) was applied to Winter wheat. The experiment and evaluation were performed as described above in the experimental methods.

### Results

**Table 1 Effect on Glyphosate activity on Black nightshade plants^{a}**

| **Example** | **MFC conc. (%)** | **Surfactant** | **Surfactant conc. (%)** | **Fresh weight compared to untreated plants (%)^{b}** |
|---|---|---|---|---|
| 1 | - | - | - | 80 |
| 2 | 0.02 | - | - | 60 |
| 3 | - | Sucrose laurate | 0.02 | 92 |
| 4 | - | Sucrose laurate | 0.25 | 74 |
| 5 | 0.02 | Sucrose laurate | 0.02 | 50 |
| 6 | 0.02 | Sucrose laurate | 0.25 | 39 |
| 7 | - | Alcohol ethoxylate | 0.02 | 76 |
| 8 | - | Alcohol ethoxylate | 0.25 | 52 |
| 9 | 0.02 | Alcohol ethoxylate | 0.02 | 42 |
| 10 | 0.02 | Alcohol ethoxylate | 0.25 | 40 |
| 11 | - | Polyglycerol | 0.25 | 55 |
| 12 | 0.02 | Polyglycerol | 0.25 | 28 |

| | | | | |
|---|---|---|---|---|
| ^{a} Glyphosate dosage, 0.6 mM. ^{b} fresh weight relative to untreated plants, set as 100%. | | | | |

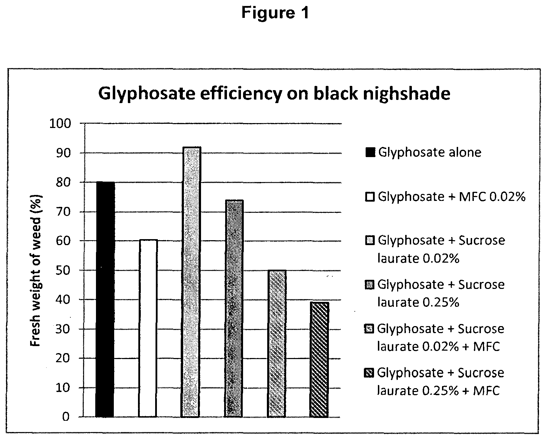

The results from the experiments on Black nightshade plants described in the examples are shown in Table 1 and Figures 1-3. The "fresh" weight of the plants were measured and compared to the fresh weight of plants treated with Glyphosate alone (example 1, comparative). Black nightshade is a plant with leaf cuticles that are difficult to penetrate, especially for hydrophilic herbicides like Glyphosate. Three different surfactants were tested with microfibrillated cellulose: sucrose laurate, alcohol ethoxylate and polyglycerol based surfactants. The sucrose laurate based surfactant is known to have good wetting properties but does not increase the uptake of Glyphosate into the plant leaves. Good wetting properties are important on grass type weed species while for the plant species that have leaf cuticles that are difficult to penetrate it is important to use an adjuvant that enhances the uptake of the herbicide into the plant leaves. The sucrose laurate based surfactant is also known to be less irritating and more environmentally friendly than other surfactants normally used as adjuvants for Glyphosate, like for example the tallow amine ethoxylates.

Examples 3 and 4 show that the sucrose laurate based surfactant has little effect on the uptake of Glyphosate on the Black nightshade plants. However, as shown in example 5 and 6 and in Figure 1, by adding MFC, the activity is largely increased. There is a strong synergistic effect when MFC is added to sucrose laurate. It is also interesting to note that no activity was observed for the sucrose laurate based surfactant at a low concentration (example 3), while when MFC is added the activity is almost at the same level as for the higher surfactant concentration (example 5). This is further evidence for the synergistic effect that adding MFC not only improves pesticide uptake but also helps reducing the amount of surfactant needed.

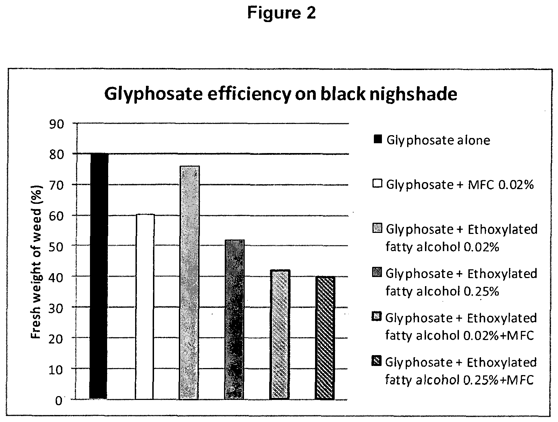

Alcohol ethoxylate based surfactants are generally known to be good wetting agents for Glyphosate and also to increase the uptake of Glyphosate into the plant leaves to a certain extent. Figure 2 shows the effect of the alcohol ethoxylate based surfactant alone and in combination with MFC. Examples 7 and 8 show the results for the alcohol ethoxylate based surfactant and Glyphosate at two different concentrations of the surfactant. Alcohol ethoxylate based surfactant reduces the fresh weight more than the sucrose laurate based surfactant (examples 2 and 3). Figure 2 shows that when MFC is added (examples 9 and 10) the activity is increased even further. It is again interesting to note that when MFC is added the surfactant amount could be reduced by a factor of 10 while still maintaining the same activity (examples 7 and 9). Surfactants when used as wetting agents are usually used at a concentration of 0.25% or higher.

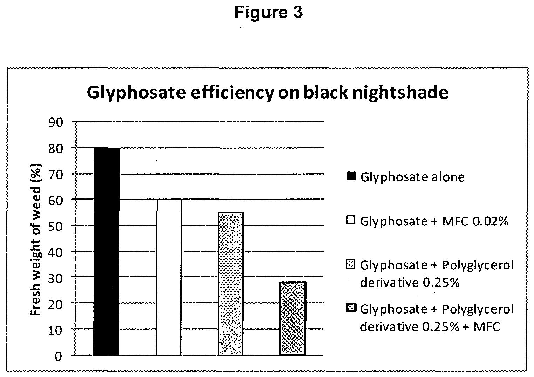

Polyglycerol based surfactants are environmentally friendly surfactants and known to be a good adjuvants for Glyphosate. Figure 3 shows a synergistic effect when MFC is added to the polyglycerol based surfactants. A good increase in the reduction of the fresh weight was observed when MFC was added (examples 11 and 12). The combination of MFC and a polyglycerol based surfactant provides a highly efficient and even more environmentally friendly adjuvant for Glyphosate.

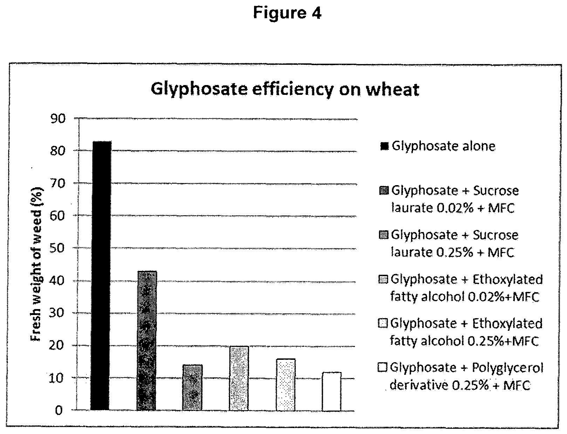

Examples 13 to 18 (Table 2 and Figure 4) show the effect of the MFC and surfactant adjuvant combinations on **winter wheat** plants which represents a grass type weed species which are difficult to wet. The combination of MFC and surfactant are also highly efficient adjuvants on Winter wheat which shows that this new type of adjuvants also display excellent wetting properties.

**Table 2 Effect on Glyphosate activity on Winter wheat^{a}**

| **Example** | **MFC conc. (%)** | **Surfactant** | **Surfactant conc. (%)** | **Fresh weight compared to untreated plants (%)^{b}** |
|---|---|---|---|---|
| 13 | - | - | - | 83 |
| 14 | 0.02 | Sucrose laurate | 0.02 | 43 |
| 15 | 0.02 | Sucrose laurate | 0.25 | 14 |
| 16 | 0.02 | Alcohol ethoxylate | 0.02 | 20 |
| 17 | 0.02 | Alcohol ethoxylate | 0.25 | 16 |
| 18 | 0.02 | Polyglycerol | 0.25 | 12 |

| | | | | |
|---|---|---|---|---|
| ^{a} Glyphosate dosage, 2.4 mM. ^{b} fresh weight relative to untreated plants, set as 100%. | | | | |

It is important to have adjuvants that are versatile and efficient on different weed species as in the field there will be many different types of weeds to be controlled by Glyphosate.

By combining MFC and surfactants that are good wetting agents an adjuvant composition that displays both excellent wetting and uptake properties is obtained. This also gives the possibility of making environmentally friendly adjuvants based on MFC and green surfactants that can replace the traditional and less environmentally friendly adjuvants. The possibility of reducing the surfactant amount compared to the normally required dosage is also beneficial for the environment and can reduce handling issues for the farmer like foaming and health and safety issues.

## Claims

1. Pesticide composition comprising:
i) at least one pesticide compound,
ii) at least one microfibrillated cellulose and
iii.) at least one surfactant,
wherein the raw material for the at least one microfibrillated cellulose is not cellulose of bacterial origin, and wherein the amount of the at least one microfibrillated cellulose in the composition is 0.001 to 0.1% by weight.

2. Pesticide composition of claim 1, wherein the pesticide is a hydrophilic pesticide, in particular a hydrophilic herbicide.

3. Pesticide composition of claim 1 or 2, wherein the surfactant is a non-ionic surfactant.

4. Pesticide composition of claim 3, wherein the non-ionic surfactant is selected from one or more of the following groups:
alkylphenol ethoxylates, alcohol ethoxylates, fatty acid ethoxylates, amine ethoxylates, polyalkyloxy compounds, sorbitan esters and their ethoxylates, castor oil ethoxylates, ethylene oxide /propylene oxide copolymers, alkanol/propylene oxide /ethylene oxide copolymers, alkylpolysaccaride, polyalcohols and ethoxylated polyalcohols.

5. Pesticide composition according to any one of the preceding claims, wherein the pesticide is a herbicide and the herbicide is selected from one of the following classes:
Acetyl CoA carboxylase (ACCase) inhibitors such as Quizalofop-P-ethyl, Acetolactate synthase (ALS) inhibitors or Acetohydroxy acid synthase (AHAS) inhibitors such as Nicosulfuron, Photosystem II inhibitors such as Bentazon, Photosystem I inhibitors such as Diquat and Paraquat, Carotenoid biosynthesis inhibitors such as Amitrole and Mesotrione, Enolpyruvyl shikimate-3-phosphate (EPSP) synthase inhibitors such as Glyphosate, Glutamine synthase inhibitors such as Glufosinate, Synthetic auxins such as 2,4-D (acid and salts), Dicamba, MCPA (acid and salts) and fluoroxypyr.

6. Pesticide composition according to any one of the preceding claims, wherein the amount of the microfibrillated cellulose is from 0.01% - 0.1%.

7. Pesticide composition according to any one of the preceding claims, wherein the microfibrillated cellulose (MFC) is an unmodified MFC and/or a chemically modified MFC having neutral or negatively charged substituents and/or a physically modified MFC.

8. Pesticide composition according to any one of the preceding claims, wherein the microfibrillated cellulose (MFC) is an unmodified MFC and/or a chemically modified MFC having neutral or negatively charged substituents and is preferably present in an amount of from 0.01% - 0.1 %.

9. Pesticide composition according to any one of the preceding claims, wherein the microfibrillated cellulose (MFC) is a physically modified MFC and is preferably present in an amount of from 0.01% - 0.1%.

10. Pesticide composition according to any one of the preceding claims, wherein the amount of surfactant in the composition is from 0.005% to 2%, preferably 0,01% to 1%, further preferably 0.02% - 0.5%.

11. Pesticide composition of any of the preceding claims, wherein said pesticide is an insecticide selected from the group consisting of Organophosphates.

12. Pesticide composition of any of the claims 1 to 10, wherein said pesticide is a growth regulator selected from the group of Gibberellin biosynthesis inhibitors.

13. Pesticide composition of any of the claims 1 to 10, wherein said pesticide is a herbicide and said herbicide is glyphosate.

14. A method for preparing a pesticide composition of any of the preceding claims comprising mixing at least one pesticide, at least one surfactant and at least one microfibrillated cellulose.

15. Use of a microfibrillated cellulose as an adjuvant, in the pesticide composition of any of claims 1 to 13.

## Patentansprüche

1. Pestizidzusammensetzung, umfassend:
i) mindestens eine Pestizidverbindung,
ii) mindestens eine mikrofibrillierte Cellulose und
iii) mindestens ein Tensid,
wobei das Rohmaterial für die mindestens eine mikrofibrillierte Cellulose keine Cellulose bakteriellen Ursprungs ist und wobei die Menge der mindestens einen mikrofibrillierten Cellulose in der Zusammensetzung 0,001 bis 0,1 Gew.-% beträgt.

2. Pestizidzusammensetzung nach Anspruch 1, wobei das Pestizid ein hydrophiles Pestizid ist, insbesondere ein hydrophiles Herbizid.

3. Pestizidzusammensetzung nach Anspruch 1 oder 2, wobei das Tensid ein nichtionisches Tensid ist.

4. Pestizidzusammensetzung nach Anspruch 3, wobei das nichtionische Tensid ausgewählt ist aus einer oder mehreren der folgenden Gruppen:
Alkylphenolethoxylate, Alkoholethoxylate, Fettsäureethoxylate, Aminethoxylate, Polyalkyloxyverbindungen, Sorbitanester und deren Ethoxylate, Rizinusölethoxylate, Ethylenoxid/Propylenoxid-Copolymere, Alkanol/Propylenoxid/Ethylenoxid-Copolymere, Alkylpolysaccharide, Polyalkohole und ethoxylierte Polyalkohole.

5. Pestizidzusammensetzung nach einem der vorhergehenden Ansprüche, wobei das Pestizid ein Herbizid ist und das Herbizid aus einer der folgenden Klassen ausgewählt ist:
Acetyl-CoA-Carboxylase (ACCase)-Inhibitoren wie Quizalofop-P-ethyl, Acetolactatsynthase (ALS)-Inhibitoren oder Acetohydroxysäuresynthase (AHAS)-Inhibitoren wie zum Beispiel Nicosulfuron, Photosystem II-Inhibitoren wie zum Beispiel Bentazon, Photosystem I-Inhibitoren wie zum Beispiel Diquat und Paraquat, Carotinoid-Biosynthesehemmer wie zum Beispiel Amitrol und Mesotrion, Enolpyruvylshikimat-3-phosphat (EPSP)-Synthase-Inhibitoren wie zum Beispiel Glyphosat, Glutaminsynthase-Inhibitoren wie zum Beispiel Glufosinat, synthetische Auxine wie zum Beispiel 2,4-D (Säure und Salze), Dicamba, MCPA (Säure und Salze) und Fluoroxypyr.

6. Pestizidzusammensetzung nach einem der vorhergehenden Ansprüche, wobei die Menge der mikrofibrillierten Cellulose 0,01% bis 0,1% beträgt.

7. Pestizidzusammensetzung nach einem der vorhergehenden Ansprüche, wobei die mikrofibrillierte Cellulose (MFC) eine unmodifizierte MFC und/oder eine chemisch modifizierte MFC mit neutralen oder negativ geladenen Substituenten und/oder einer physikalisch modifizierten MFC ist.

8. Pestizidzusammensetzung nach einem der vorhergehenden Ansprüche, wobei die mikrofibrillierte Cellulose (MFC) eine unmodifizierte MFC und/oder eine chemisch modifizierte MFC mit neutralen oder negativ geladenen Substituenten ist und vorzugsweise in einer Menge von 0,01% bis 0,1% vorliegt.

9. Pestizidzusammensetzung nach einem der vorhergehenden Ansprüche, wobei die mikrofibrillierte Cellulose (MFC) eine physikalisch modifizierte MFC ist und vorzugsweise in einer Menge von 0,01% bis 0,1% vorliegt.

10. Pestizidzusammensetzung nach einem der vorhergehenden Ansprüche, wobei die Menge an Tensid in der Zusammensetzung 0,005% bis 2%, vorzugsweise 0,01% bis 1%, ferner bevorzugt 0,02% bis 0,5%, beträgt.

11. Pestizidzusammensetzung nach einem der vorhergehenden Ansprüche, wobei das Pestizid ein Insektizid ist, das ausgewählt ist aus der Gruppe bestehend aus Organophosphaten.

12. Pestizidzusammensetzung nach einem der Ansprüche 1 bis 10, wobei das Pestizid ein Wachstumsregulator ist, der aus der Gruppe von Gibberellin-Biosynthesehemmern ausgewählt ist.

13. Pestizidzusammensetzung nach einem der Ansprüche 1 bis 10, wobei das Pestizid ein Herbizid ist und das Herbizid Glyphosat ist.

14. Verfahren zur Herstellung einer Pestizidzusammensetzung nach einem der vorhergehenden Ansprüche, umfassend das Mischen von mindestens einem Pestizid, mindestens einem Tensid und mindestens einer mikrofibrillierten Cellulose.

15. Verwendung einer mikrofibrillierten Cellulose als Adjuvans in der Pestizidzusammensetzung nach einem der Ansprüche 1 bis 13.

## Revendications

1. Composition pesticide comprenant :
i) au moins un composé pesticide,
ii) au moins une cellulose microfibrillée et
iii) au moins un tensioactif,
dans laquelle la matière première pour l'au moins une cellulose microfibrillée n'est pas une cellulose d'origine bactérienne, et dans laquelle la quantité de l'au moins une cellulose microfibrillée dans la composition est de 0,001 à 0,1 % en poids.

2. Composition pesticide selon la revendication 1, dans laquelle le pesticide est un pesticide hydrophile, en particulier un herbicide hydrophile.

3. Composition pesticide selon la revendication 1 ou 2, dans laquelle le tensioactif est un tensioactif non-ionique.

4. Composition pesticide selon la revendication 3, dans laquelle le tensioactif non-ionique est choisi parmi un ou plusieurs éléments des groupes suivants :
alkylphénols éthoxylés, alcools éthoxylés, acides gras éthoxylés, amines éthoxylées, composés polyalkyloxy, esters de sorbitan et leurs produits d'éthoxylation, produits d'éthoxylation d'huile de ricin, copolymère d'oxyde d'éthylène/oxyde de propylène, copolymères d'alcanol/oxyde de propylène/oxyde d'éthylène, alkylpolysaccharides, polyols et polyols éthoxylés.

5. Composition pesticide selon l'une quelconque des revendications précédentes, dans laquelle le pesticide est un herbicide et l'herbicide est choisi parmi l'une des classes suivantes :
inhibiteurs de l'acétyl-CoA-carboxylase (ACCase) tels que quizalofop-p-éthyl, inhibiteurs de l'acétolactate synthase (ALS) ou inhibiteurs de l'acétohydroxyacide synthase (AHAS) tels que nicosulfuron, inhibiteurs du photosystème II tels que bentazone, inhibiteurs du photosystème I tels que diquat et paraquat, inhibiteurs de la biosynthèse des caroténoïdes tels qu'amitrole et mésotrione, inhibiteurs de la 5-énolpyruvylshikimimate-3-phosphate synthase (EPSP) tels que glyphosate, inhibiteurs de la glutamine synthétase tels que glufosinate, auxines synthétiques telles que 2,4-D (acide et sels), dicamba, MCPA (acides et sels) et fluoroxypyr.

6. Composition pesticide selon l'une quelconque des revendications précédentes, dans laquelle la quantité de cellulose microfibrillée est de 0,01 % à 0,1 %.

7. Composition pesticide selon l'une quelconque des revendications précédentes, dans laquelle la cellulose microfibrillée (MFC) est une MFC non modifiée et/ou une MFC chimiquement modifiée ayant des substituants neutres ou chargés négativement et/ou une MFC physiquement modifiée.

8. Composition pesticide selon l'une quelconque des revendications précédentes, dans laquelle la cellulose microfibrillée (MFC) est une MFC non modifiée et/ou une MFC chimiquement modifiée ayant des substituants neutres ou chargés négativement et est de préférence présente en une quantité de 0, 01 % à 0,1 %.

9. Composition pesticide selon l'une quelconque des revendications précédentes, dans laquelle la cellulose microfibrillée (MFC) est une MFC physiquement modifiée et est de préférence présente en une quantité de 0,01 % à 0,1 %.

10. Composition pesticide selon l'une quelconque des revendications précédentes, dans laquelle la quantité de tensioactif dans la composition est de 0,005 % à 2 %, de préférence de 0,01 % à 1 %, plus particulièrement de 0,02 % à 0,5 %.

11. Composition pesticide selon l'une quelconque des revendications précédentes, dans laquelle ledit pesticide est un insecticide choisi dans le groupe constitué par les organophosphorés.

12. Composition pesticide selon l'une quelconque des revendications 1 à 10, dans laquelle ledit pesticide est un régulateur de croissance choisi dans le groupe des inhibiteurs de la biosynthèse des gibbérellines.

13. Composition pesticide selon l'une quelconque des revendications 1 à 10, dans laquelle ledit pesticide est un herbicide et ledit herbicide est le glyphosate.

14. Procédé pour préparer une composition pesticide de l'une quelconque des revendications précédentes, comprenant le mélange d'au moins un pesticide, d'au moins un tensioactif et d'au moins une cellulose microfibrillée.

15. Utilisation d'une cellulose microfibrillée en tant qu'adjuvant, dans la composition pesticide de l'une quelconque des revendications 1 à 13.
